# EUROPEAN PATENT APPLICATION

(11) **EP 0 534 118 A1**
(43) Date of publication of application: **31.03.1993**
(21) Application number: 92113869.9
(22) Date of filing: 14.08.1992
(51) Int. Cl.: A01J 11/00, A23C 3/02, B01F 7/16, B01F 15/00

(54) **Stirrer for pasteurizing machines**

(30) Priority: 27.09.1991 IT GE910124
(71) Applicant: Carpigiani S.r.L., I-40011 Anzola Emilia, Bologna (IT)
(72) Inventor: Cocchi, Gino, Bologna (IT); Pietra, Giancarlo, Anzola Emilia (IT)
(74) Representative: Porsia, Attilio, Dr.

(57) **Abstract**

Stirrer for pasteurizing machines or the like of the type which is rotatable about a vertical axis, co-axially in a cylindrical tank (2). In order to prevent the upward displacement of the cream or the thickened product due to the scraping screw, the invention proposes a stirrer which, in addition to the scraping screw (7), comprises a mixing/pasteurizing blade (8) arranged substantially diametrically opposite to the scraping screw (7) with respect to the axis of rotation and comprising a frame having the shape of a rectangular quadrangle crossed over by a transverse member (208) and whose sides, namely the radially outer one (108) and the lower one, are slightly spaced with small tolerances from the inner surface and from the bottom, respectively, of the tank (2), while the frame extends vertically up to substantially halfway of said tank (2).

## Description

The invention relates to a stirrer for pasteurizing machines, particularly of the type which is rotatable about a vertical axis, co-axially in a cylindrical tank.

Stirrers which are presently used in the machines for pasteurization and for preparing pastry cream are provided, in the radially outer region thereof, with a scraping screw capable of removing the mixture which thickens on the walls of the tank, and - in their region intermediate between the scraping screw and the axis of rotation - with a plurality of vertical rods spaced apart laterally, so-called rails, having the function of homogenizing and mixing the mixture being processed.

This construction, however, has the disadvantage that the mixture being processed comes to a standstill and thickens on the vertical rods, while the thickened product is lifted towards the top of the tank by the thrust created by the scraping screw. Upon being lifted, the thickened product causes the top cover of the tank to open and, therefore, the machine to stop. In order to avoid the above, therefore, the operator is obliged to fill the tank to a lesser extent with respect to the maximum possible quantity of mixture, whereby its production capacity is exploited only partially and the product will have a higher cost.

Therefore, the object of the invention is to provide a stirrer of the type described in the preamble, which thanks to a simple and inexpensive construction permits to overcome the above-mentioned disadvantages of the known pasteurizing machines.

The invention achieves said objective by providing a stirrer for pasteurizing machines and the like of the type described in the preamble, with a scraping screw provided with a plurality of scraping paddles which are aligned vertically and are urged against the inner surface of the tank by resilient means and with an additional mixing/pasteurizing blade which is arranged diametrically opposite to the scraping screw with respect to the axis of rotation and comprises a frame having the shape of a rectangular quadrangle which is crossed over by a transverse member and whose sides, namely the radially outer one and the lower one, are slightly spaced with small tolerances from the inner surface and from the bottom, respectively, of the tank, while the frame extends vertically up to substantially halfway of said tank.

Preferably, the transverse member crosses over the frame along a diagonal thereof, more particularly from the upper radially outer angle to the lower radially inner angle.

Thanks to this construction, surprisingly, the tendency of the cream to move upwards is eliminated, without compromising the functionality of the stirrer at all. This enables a maximum exploitation of the capacity of pasteurizing machines, thus reducing the manufacturing costs at a parity of the quality of products.

The invention also relates to other characteristics which further improve the above stirrer and which form the subject matter of the sub-claims.

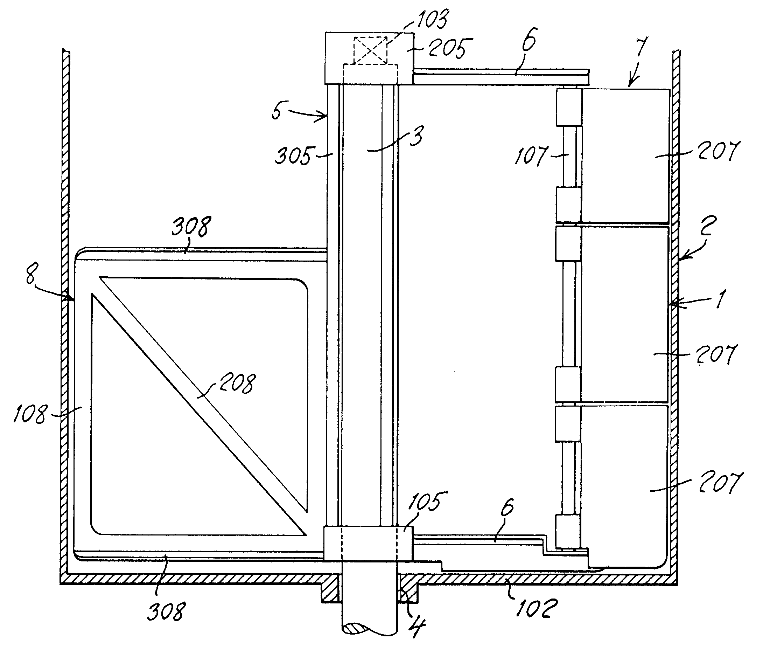

The particular characteristics of the invention and the advantages resulting therefrom will appear with more detail from the description of a preferred embodiment. An elevational side view of the stirrer according to the invention is shown, by way of a non-limiting example, in the accompanying drawing.

The stirrer 1 is arranged co-axially in a cylindrical tank 2 whose bottom is closed and whose top is either open or os closed by a removable cover. A co-axial, rotary drive shaft 3 is sealingly passed through an intermediate opening 4 in the bottom 102 of the cylindrical tank 2.

The stirrer 1 comprises a central hub 5 which is removably keyed to the rotary drive shaft 3. More particularly, the central hub 5 comprises a lower bush 105 and an upper bush 205. The upper bush 205 is drivingly engaged for rotation with the rotary drive shaft 3 by means of a central non-round seat capable of threading on a co-axial complementary non-round extension 103 on the top end of the rotary drive shaft 3. The bushes 105, 205 of the hub 5 are connected to each other by a plurality of vertical rods 305 distributed along the peripheral skirt of the hub 5.

Extending from both the upper and the lower ends of the hub 5 are two radial spokes 6 which support a screw scraper indicated generally at 7. The screw scraper 7 is designed to remove the cream from the inner wall of the tank 2. The radial spokes 6 are staggered angularly to each other with respect to the axis of rotation. The scraping screw 7 comprises a mounting spindle 107 which is inclined with respect to the axis of the tank 2, and it is secured at the ends thereof to the spokes 6. The mounting spindle 107 of cylindrical cross section rotatably supports thereon a plurality, specifically three scraping blades 207. The supporting blades 207 are vertically aligned with each other and are urged with their radially outer ends against the inner wall of the tank 2 by the action of resilient means (not shown) such as, for example, torsional springs or the like, arranged between the mounting spindle 107 and said blades 207.

At the substantially diametrically opposite side of the scraping screw 7, the stirrer comprises a further mixing/pasteurizing blade 8 carried by the hub 5, or else by a vertical rod 305 connected to the two bushes 105, 205. The mixing/pasteurizing blade 8 consists of a rectangular frame. The sides of the rectangular frame 8 have a radial dimension which is considerably larger than the thickness thereof. The outermost side 108 is spaced from the inner wall of the tank 2 with a comparatively small tolerance. The same is true also for the horizontal lower side 208. The mixing/pasteurizing blade 8 extends vertically substantially up to half the height of the tank 2 or, if desired, just above half the height of the tank 2. With respect to the scraping screw 7, it extends vertically to a level between half and two thirds of the height of the scraping screw 7.

According to a further characteristic, the frame of the mixing/pasteurizing blade 8 is crossed over by a further transverse member 208. The best functional advantages resulting from the elimination of the upward displacement of the product being pasteurized are obtained when said transverse member is inclined with its radially inner end towards the bottom of the tank (2), preferably when it coincides with the diagonal of the frame extending from the upper, radially inner angle to the lower, inner angle. The transverse member 208 has a similar cross section as the sides of the frame.

According to a further improvement, the mixing/pasteurizing blade 8 may comprise an upper and/or lower wing 308 extending along the outer edge of the horizontal sides at an angle with respect to the vertical plane.

## Claims

1. A stirrer for pasteurizing machines or the like of the type which is rotatable about a vertical axis, co-axially in a cylindrical tank (2), characterized in that it comprises a scraping screw (7) including a plurality of scraping paddles (207) which are aligned vertically and are urged against the inner surface of the tank (2) by resilient means, and an additional mixing/pasteurizing blade (8) which is arranged substantially diametrically opposite to the scraping screw (7) with respect to the axis of rotation and is formed by a frame having the shape of a rectangular quadrangle which is crossed over by a transverse member (208) and whose sides, namely the radially outer one (108) and the lower one, are slightly spaced with small tolerances from the inner surface and from the bottom, respectively, of the tank (2), while the frame extends vertically up to substantially halfway of said tank (2).

2. A stirrer according to claim 1, characterized in that the transverse member (208) is inclined with its radially inner end towards the bottom (108) of the tank (2) and, preferably, it extends along a diagonal of the frame, from the upper radially outer angle to the lower radially inner angle.

3. A stirrer according to claims 1 or 2, characterized in that the mixing/pasteurizing blade (8) extends substantially up to a height between half and two thirds of the height of the scraping screw (7).

4. A stirrer according to one or more of the preceding claims, characterized in that the sides and the transverse member of the frame which forms the mixing/pasteurizing blade (8) have in the radial direction a width which is considerably larger than their thickness.

5. A stirrer according to one or more of the preceding claims, characterized in that the upper and/or lower sides of the frame forming the mixing/pasteurizing blade (8) are provided on the outer edge thereof with a deflector wing (308) which is at an angle with respect to the vertical plane.
